# EUROPEAN PATENT SPECIFICATION

(11) **EP 2 119 737 B1**
(45) Date of publication and mention of the grant of the patent: **04.05.2011**
(21) Application number: 08156292.8
(22) Date of filing: 15.05.2008
(51) Int. Cl.: C08G 59/24, C08K 9/06, H01L 23/29

(54) **Electronic packaging**
Elektronische Verpackung
Emballage électronique

(43) Date of publication of application: 18.11.2009
(73) Proprietor: Evonik Degussa GmbH, 45128 Essen (DE)
(72) Inventor: Nowak, Rüdiger, 79400 Kandern-Egerten (DE); Schlosser, Thomas, Dr., 79594 Inzlingen (DE); Wartusch, Reiner, 68642 Burstadt (DE)

(56) References cited:
- EP-A- 0 739 877
- US-A- 3 333 776
- US-A- 4 043 969
- US-A1- 2008 039 556
- DATABASE WPI Week 199904 Thomson Scientific, London, GB; AN 1999-040678 XP002500395 & JP 10 298170 A (SUMITOMO CHEM CO LTD) 10 November 1998 (1998-11-10)
- BUGNICOURT ET AL: "Structural investigations of pyrogenic silica-epoxy composites: Combining small-angle neutron scattering and transmission electron microscopy" POLYMER, ELSEVIER SCIENCE PUBLISHERS B.V, GB, vol. 48, no. 4, 1 February 2007 (2007-02-01), pages 949-958, XP005869426 ISSN: 0032-3861
- DATABASE CHEMABS CHEMICAL ABSTRACTS SERVICE, COLUMBUS, OHIO, US; 1984, HECTOR COCHRANE, E.A.: "Hydrophobic fumed silica control of epoxy rheology" XP002500393
- DATABASE CHEMABS CHEMICAL ABSTRACTS SERVICE, COLUMBUS, OHIO, US; 1986, HONGYUN LIU, E.A.: "Modification of silicas for fluidization of high-strength room-temperatre-vulcanized silicone rubber" XP002500394

## Description

The present invention relates to an epoxy resin composition which is useful for encapsulating electric and electronic materials, particularly electric parts such as an adhesive, paint, insulation material and laminate.

Recently, for encapsulating semiconductors such as LSI, IC, transistor and the like, transfer mold of an economically useful epoxy resin composition is conducted.

Particularly, surface amounting of LSI is recently conducted, and direct immersion into a solder bath is increasing. Since an encapsulating material is exposed to high temperature in this treatment, moisture absorbed in the encapsulating material expands, crack is formed in the material, and peeling occurs at interface with a die pat.

Therefore, the epoxy resin encapsulant is required to have low moisture absorption, high crack resistance and improved adhesion. Further, for obtaining low moisture absorption, an epoxy resin of low viscosity in which a filler can be filled in high concentration is desired. Currently condition, an encapsulating material in which glycidyl ether of o-cresol novolak is used as a polyfunctional epoxy resin and phenol novolak is used as a curing agent is mainly used, however, when the encapsulating material absorbs moisture in storage, the above-described problems occur. Therefore, for avoiding these problems, the encapsulating material is wrapped for preventing moisture absorption in practical use.

On the other hand, a biphenyl type epoxy resin in current use has a lower viscosity and can contain a filler in higher concentration than a polyfunctional epoxy resin, since the biphenyl epoxy resin is a bifunctional epoxy resin and has a low molecular weight. Therefore, moisture absorption depending on the biphenyl type epoxy resin can be reduced as whole package and strength thereof can be increased, consequently, excellent crack resistance can be obtained as compared with an epoxy resin in the form of a glycidyl ether of o-cresol novolak. However, the biphenyl type epoxy resin has problem that molding property of a cured article thereof is low as compared with the polyfunctional epoxy resin.

There is also a method in which molding property is improved by combining the current biphenyl type epoxy resin with the cresol novolak type epoxy resin with maintaining the resin viscosity at suitable level, however, the mixture of the biphenyl type epoxy resin and the cresol novolak type epoxy resin becomes semisolid state (honey-like state) and has no definite shape after melt mixing, therefore, handling property of the resin is insufficient. Further, the mixed resin tends to adhere each other, therefore, there is a problem in handling a large amount of the resin.

On the other hand, a dicyclopentadiene type epoxy resin which has curing ability between that of the biphenyl type epoxy resin and that of the cresol novolak type epoxy resin is commercially available. There is a problem that the dicyclopentadiene type epoxy resin has a low melting point and tends to adhere each other, therefore, the resin should be cooled and preserved, consequently, there is also a problem in handling a large amount of the resin as above.

In addition, the dicyclopentadiene type epoxy resin contains a small number of epoxy groups per unit weight of resin, therefore curing and molding property thereof are sometimes insufficient, and further, heat resistance of the cured and molded article are also sometimes insufficient, since the resin has an alicyclic structure derived from non-reactive dicyclopentadiene.

The biphenyl type bifunctional epoxy resin has a problem that curing and molding property is poor since the number of epoxy functional group is small per one molecule, unlike the cresol novolak type polyfunctional epoxy resin. Specifically, Barcole hardness of the biphenyl type resin slightly lowers in molding as compared with the polyfunctional epoxy resin, therefore, a method for enhancing Barcole hardness has been desired.

An object of the present invention is to provide a resin composition which is an excellent material as an epoxy semiconductor encapsulating material, obtained by using an epoxy resin which has excellent molding property and excellent handling property even at room temperature, and a resin encapsulated semiconductor device using the resin composition.

That is, the present invention is an epoxy resin composition comprising:
(A) an epoxy compound represented by the general formula (1): 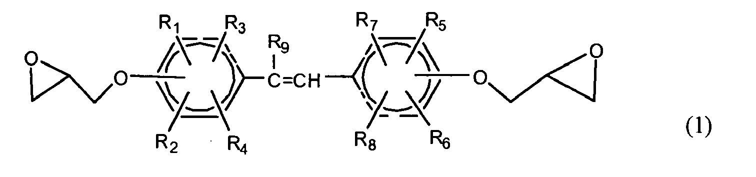 wherein, R₁ to R₉ represent each independently a hydrogen atom, an acyclic or cyclic alkyl group having 1 to 6 carbon atoms, a substituted or unsubstituted phenyl group or a halogen atom,
(B) a polyfunctional epoxy compound having a functional group number of two or more, and
(C) an epoxy curing agent containing a phenolic hydroxyl group,
   wherein the proportion of the epoxy compound (A) is from 1 to 99% by weight based on the total weight of the epoxy compounds (A) and (B), whereas the epoxy resin composition contains a pyrogenically produced silica, which has been surface modified with Hexamethyldisilazane (HMDS) and structurally modified by a ball mill.

Further, the present invention relates to a resin-encapsulated semiconductor device obtained by encapsulating a semiconductor element using the above epoxy resin composition.

Specific examples of the respective substituents R1 to R9 of the epoxy resin represented by the general formula (1) used in the present invention include methyl group, ethyl group, propyl group, butyl group, amyl group, hexyl group, cyclohexyl group, phenyl group, tolyl group, xylyl group (including respective isomers), chlorine atom , bromine atom and the like.

The epoxy resin represented by the general formula (I) can be obtained by glycidyl-etherifying stilbenephenols according to a conventional method.

A literature (von Rolf H. Sieber, Liebigs Ann. Chem. 730, 31 to 46 (1969)) discloses a production method of a stilbene-based bisphenol compound which is a raw material of the epoxy resin, and physical properties of compounds such as 4,4'-dihydroxystilbene, 4,4'-dihydroxy-3,3'-dimethylstilbene, 4,4'-dihydroxy-3,3',5,5'-tetramethylstilbene and the like. Another literature (METHODEN DER ORGANISCHEN CHEMIE (HOUBEN-WEYL) BAND IV/1c Phenol Teil 2 P1034) describes a production method of 4,4'-dihydroxy- alpha -methylstilbene, etc. using phenol and chloroacetone as a starting material.

Specific examples of the stilbene-based phenols used as a raw material of the epoxy resin represented by the general formula (1) include 4,4'-dihydroxy-3-methylstilbene, 4,4'-dihydroxy-3-ethylstilbene, 4,4'-dihydroxy-3-propylstilbene, 4,4'-dihydroxy-3-amylstilbene, 4,4'-dihydroxy-3-hexylstilbene, 4,4'-dihydroxy-2,3-dimethylstilbene, 4,4'-dihydroxy-2,6-dimethylstilbene, 4,4'-dihydroxy-2,3'-dimethylstilbene, 4,4'-dihydroxy-3,3',5-trimethylstilbene, 4,4'-dihydroxy-3,3',5-trimethylstilbene, 4,4'-dihydroxy-3,3',5,5'-tetramethylstilbene, 4,4'-dihydroxy-2',3,5,6'-tetramethylstilbene, 3-t-butyl-4,4'-dihydroxy-3'-methylstilbene, 3-t-butyl-4,4'-dihydroxy-5,3'-dimethylstilbene, 3-t-butyl-4,4'-dihydroxy-3',6-dimethylstilbene, 3-t-butyl-4,4'-dihydroxy-3'-methyl-5-propylstilbene, 3-t-butyl-4,4'-dihydroxy-5-butyl-3'-methylstilbene, 3-t-butyl-4,4'-dihydroxy-5-amyl-3'-methylstilbene, 3-t-butyl-4,4'-dihydroxy-5-hexyl-3'-methylstilbene, 3-t-butyl-4,4'-dihydroxy-5-cyclohexyl-3'-methylstilbene, 3-t-butyl-4,4'-dihydroxy-3,5,5'-trimethylstilbene, 3-t-butyl-2,4'-dihydroxy-3',5',6-trimethylstilbene, 3-t-butyl-4,4'-dihydroxy-3',5',6-trimethylstilbene, 3-t-butyl-4,4'-dihydroxy-3',5-dimethyl-5'-propylstilbene, 3-t-butyl-4,4'-dihydroxy-3',6-dimethyl-5'-propylstilbene, 4,4'-dihydroxy-3,3'-dimethylstilbene, 3,3'-diethyl-4,4'-dihydroxystilbene, 4,4'-dihydroxy-3,3'-dipropylstilbene, 3,3'-diamyl-4,4'-dihydroxystilbene, 3,3'-dihexyl-4,4'-dihydroxystilbene, 3,3'-dicyclohexyl-4,4'-dihydroxystilbene, 2,2'-dihydroxy-3,3',5,5'-tetramethylstilbene, 4,4'-dihydroxy-3,3',5,5'-tetramethylstilbene, 4,4'-dihydroxy-3,3'-di-t-butylstilbene, 4,4'-dihydroxy-3,3'-di-t-butyl-5,5'-dimethylstilbene, 4,4'-dihydroxy-3,3'-di-t-butyl-6,6'-dimethylstilbene, 2,2'-dihydroxy-3,3'-di-t-butyl-6,6'-dimethylstilbene, 2,4'-dihydroxy-3,3'-di-t-butyl-6,6'-dimethylstilbene, 4,4'-dihydroxy-3,3',5,5'-tetra-t-butylstilbene and the like (including isomers having different substitution position). Epoxy compounds of alpha -methylstilbene obtained by substituting a carbon atom on a carbon-carbon double bond of these stilbene compounds with a methyl group are also exemplified. Among these compounds, 2,2'-dihydroxy-3,3',5,5'-tetramethylstilbene, 4,4'-dihydroxy-3,3',5,5'-tetramethylstilbene, 4,4'-dihydroxy-3,3',5,5'-tetramethyl- alpha -methylstilbene, 4,4'-dihydroxy-3,3'-di-t-butyl-5,5'-dimethylstilbene, 4,4'-dihydroxy-3,3'-di-t-butyl-6,6'-dimethylstilbene, 2,2'-dihydroxy-3,3'-di-t-butyl-6,6'-dimethylstilbene, 2,4'-dihydroxy-3,3'-di-t-butyl-6,6'-dimethylstilbene, 3-t-butyl-4,4'-dihydroxy-3',5,5'-trimethylstilbene, 3-t-butyl-2,4'-dihydroxy-3',5',6-trimethylstilbene and 3-t-butyl-4,4'-dihydroxy-3',5',6-trimethylstilbene are particularly preferable from the viewpoints of easiness of synthesis, performances, and price of the raw material.

These epoxy resins are obtained by reacting bisphenols with an epihalohydrin in the presence of an alkaline such as sodium hydroxide and the like. Particularly, when an epoxy resin having high purity is obtained, a reaction in the presence of an aprotic solvent is suitable as described in Japanese Patent Application Laid-Open (JP-A) No. 60-31,517.

In the epoxy resin composition of the present invention, as polyfunctional epoxy compound (B) having a functional group number of two or more, there can be used known compounds, and examples thereof include novolak-based epoxy resins which are reaction products of formaldehyde with phenols such as phenol, o-cresol and the like; glycidyl ether compounds derived from three or more-functional phenols such as phloroglycine, tris-(4-hydroxyphenyl)-methane, 1,1,2,2-tetrakis(4-hydroxyphenyl)ethane and the like; glycidyl ether compounds of polyhydric phenols obtained by condensation reaction of phenols with aromatic carbonyl compounds; amine-based epoxy resins derived from p-aminophenol, m-aminophenol, 4-aminomethacresol, 6-aminomethacresol, 4,4'-diaminodiphenylmethane, 3,3'-diaminodiphenylmethane, 4,4'-diaminodiphenyl ether, 3,4'-diaminodiphenyl ether, 1,4-bis(4-aminophenoxy)benzene, 1,4-bis(3-aminophenoxy)benzene, 1,3-bis(4-aminophenoxy)benzene, 1,3-bis(3-aminophenoxy)benzene, 2,2-bis(4-aminophenoxyphenyl)propane, p-phenylenediamine, m-phenylenediamine, 2,4-toluenediamine, 2,6-toluenediamine, p-xylylenediamine, m-xylylenediamine, 1,4-cyclohexanebis(methylamine), 1,3-cyclohexanebis-(methylamine) and the like, and one or more of these epoxy resins are used.Among them, novolak-based epoxy resins which are reaction products of folmaldehyde with phenols such as phenol, o-cresol and the like, and glycidyl ether compounds of polyhydric phenols containing a trismethane group obtained by condensation reaction of phenols with aromatic carbonyl compounds are particularly preferable in view of heat resistance, easy availability and cost.

The resin composition of the present invention may contain glycidyl ester-based compounds derived from aromatic carboxylic acids such as p-oxybenzoic acid, m-oxybenzoic acid, terephthalic acid, isophthalic acid and the like, such as bisphenol A, bisphenol F, tetramethylbiphenol, hydroquinone, resorcin, 4,4'-thiodi(2,6-dimethylphenol), dihydroxynaphthalene, bis(hydroxyphenyl)dicyclopentane, bis(hydroxyphenyl)menthane and the like; hydantoin-based epoxy compounds derived from 5,5-dimethylhydantoin and the like; alicyclic epoxy resins such as 2,2-bis(3,4-epoxycyclohexyl)propane, 2,2-bis[4-(2,3-epoxypropyl)cyclohexyl]propane, vinylcyclohexenedioxide, 3,4-epoxycyclohexylmethyl-3,4-epoxycyclohexane carboxylate and the like; divalent glycidyl ether compounds such as diglycidyl ether compounds and the like derived from dihydric phenols such as N,N-diglycidylaniline and the like, amines or halogenated bisphenols such as tetrabromobisphenol A and the like. Further, the resin composition of the present invention may also contain cyanate resins such as 2,2-bis(4-cyanatephenyl)propane and the like.

The epoxy resin component of the present invention is obtained by mixing the stilbene-based epoxy compound (A) represented by the general formula (1) with the polyfunctional epoxy compound (B).

The content of the epoxy compound (A) is, for example, from 1 to 99% by weight, preferably from 20 to 99% by weight, and more preferably from 30 to 90% by weight based on the total amount of the epoxy compound (A) and the epoxy compound (B).

If only the polyfunctional epoxy compound (B) is used, melt viscosity of the resin is high, therefore, when a filler is used in large amount, flowing property of the whole resin composition in heat-melting becomes low, molding property deteriorates, gloss on the surface of the cured molded article disappears, and sometimes, unfilled portion is formed in the cured material. By combining the stilbene-based epoxy compound (A) with the polyfunctional epoxy compound (B), high filling with a filler which is difficult when the polyfunctional epoxy is used alone can be easily accomplished, and in addition, a cured material having excellent molding property is obtained.

When the content of the epoxy compound(A) is, for example, from 1 to 60% by weight based on the total amount of the epoxy compound (A) and the epoxy compound(B), flowing property of the whole composition is improved and a molded article having high Barcole harness can be obtained. The content of the epoxy compound(A) is preferably from 20 to 60% by weight, and more preferably from 30 to 60% by weight which are epoxy resin components. When the content is lower than 1% by weight, the softening point becomes lower to make the handling property insufficient.

The epoxy compound (A) has a low melt viscosity and can contain a large amount of filler without deteriorating flowing property of the whole resin composition, but the epoxy compound (A) alone, sometimes cannot afford a molded article having high Barcole hardness. By combining the polyfunctional epoxy compound (B) with the stilbene-based epoxy compound (A), it becommes possible to increase crosslinking density to make the Barclole hardness high.

For the above purpose, the content of the polyfunctional epoxy compound (B) is, for example, from 1 to not more than 40% by weight based on the total amount of the epoxy compound(A) and the epoxy compound(B), preferably from 1 to 30% by weight, and more preferably from 10 to 30% by weight. When the content is lower than 1% by weight, the effect of improving Barcole hardness is insufficient.

The epoxy compound (A) of the present invention has a melt viscosity at 150 DEG C of preferably less than 1 poise, and more preferably less than 0.5 poise. The polyfunctional epoxy compound (B) has a melt viscosity at 150 DEG C of preferably less than 10 poise, and more preferably less than 5 poise.

In practical use, the epoxy compound (A) and the polyfunctional epoxy resin (B) may be mixed with a filler and the like, or the epoxy components may be previously melted and mixed or may be melted and mixed previously with the resin component (C) such as an epoxy curing agent and the like before use.

As the epoxy curing agent (C), known curing agents can be used. Examples thereof include polyhydric phenols such as phenol novolak and the like, amine-based curing agents such as dicyanediamide, diaminodiphenylmethane, diaminodiphenylsulfone and the like, acid anhydride curing agents such as pyromellitic anhydride, trimellitic anhydride, benzophenonetetracarboxylic acid, and the like, and in view of moisture resistance, polyhydric phenols are preferable.Further, examples of polyhydric phenols as the epoxy curing agent include polycondensates of one or more phenols such as phenol, various alkylphenols, naphthol and the like with aldehydes such as formaldehyde, acetaldehyde, acrolein, glyoxal, benzaldehyde, naphthaldehyde, hydroxybenzaldehyde and the like or ketones such as cyclohexanone, acetophenone and the like; vinyl polymerization type polyhydric phenols such as polyvinylphenol, polyisopropenylphenol and the like; reaction products of phenols with diols such as a compound represented by the following formula 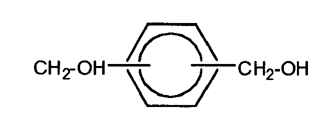 and the like or dialkoxys such as a compound represented by the following formula 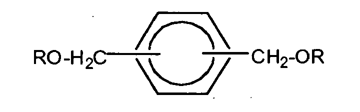 in the formula, R represents an acyclic or cyclic alkyl group having 1 to 6 carbon atoms, or substituted or unsubstituted phenyl group, and the like, or dihalogens such as a compound represented by the following formula 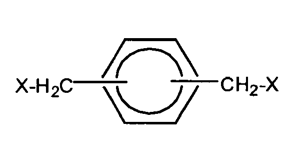 in the formula, X represents a halogen atom selected from fluorine, chlorine, bromine and iodine, and the like; and Friedel Crafts type reaction products of phenols with diolefins such as dicyclopentadiene, diisopropenylbenzene and the like, and phenol novolak is particularly preferred in view of workability and curing property. These curing agents can be used alone or in combination of two or more.

Usually, the amount of the curing agent is preferably from 0.7 to 1.2 equivalent based on the epoxy resin. When the amount is less than 0.7 equivalent, or more than 1.2 equivalent, curing is incomplete in either case.

When the epoxy resin composition of the present invention is cured, known curing accelerators can be used.

Examples of these accelerators include, but not limited to, organic phosphine compounds such as triphenylphosphine, tri-4-methylphenylphosphine, tri-4-methoxyphenylphosphine, tributylphosphine, trioctylphosphine, tri-2-cycnoethylphosphine and the like and tetraphenyl borate salts thereof; tert-amines such as tributylamine, triethylamine, 1,8-diazabicyclo(5,4,0)undecene-7, triamylamine and the like; quaternary ammonium salts such as benzyltrimethylammonium chloride, benzyltrimethylammonium hydroxide, triethylammoniumtetraphenyl borate and the like; imidazoles, and the like. Among them, organic phosphine compounds, 1,8-diazabicyclo(5,4,0)undecene-7, and imidazoles are preferred in view of moisture resistance and curing property, and triphenylphosphine is particularly preferred.

Examples of the inorganic filler (D) in the epoxy resin composition of the present invention include silica, alumina, titanium white, aluminum hydroxide, talc, clay, glass, fiber and the like, and in particular, silica and alumima are preferred. These fillers having different form (spherical or crushed type) or different size may also be mixed to increase filling amount for use.

In view of moisture resistance and molding property, the compounding ratio of the inorganic filler is from 25 to 95% by weight based on the total amount of the resin composition, preferably from 50 to 95% by weight, more preferably from 70 to 95% by weight, and more preferably from 80 to 92% by weight.

In the case of using a spherical powder as the inorganic filler, the form may advantageously be substantial sphere containing no sharp angle and having an aspect ratio of 1.0 to 1.2. A sphere having sphericity near that of a commercially available spherical silica powder produced by a spray coating method or sol-gel method is preferred, and a sphere having sphericity more close to that of a real sphere is more preferable. When sphering treatment is difficult, the inorganic material is processed into a fine powder, and then formed to a spherical powder by a mechanochamichal method with adding a binder to the powder.

The form of the crushed powder may be heteromorphic body such as a polyhedron having angle and the like. Among other, amorphous or crystalline quarts crushed powders obtained by grinding a synthetic or natural quarts lump is suitable, and specifically, fused crushed-silica and the like are suitable.

As the spherical powder used in the present invention, any powder can be used, and as one example, which composed of three groups, namely, x, y and z components, will be described. The x, y and z components have an average particle size from 0.1 to 1.5 mu m, an average particle size from 2 to 15 mu m and an average particle size from 20 to 70 mu m respectively, and more preferably an average particle size from 0.1 to 1.0 mu m, an average particle size from 2 to 10 mu m and an average particle size from 20 to 50 mu m respectively. When a powder having an average particle size of less than 0.1 mu m is used, due to flocculation of the powder each other, sometimes uniform dispersion in the resin composition becomes difficult and flowing property is lost, and the powder having an average particle size of over 70 mu m can not easily filled in fine part of a semiconductor element.When respective average particle sizes of the x, y and z components are out of the above-described ranges, flowing property of the resin composition lowers. It is preferable that the particle size distribution of each spherical powder used in the present invention is narrower, and further, a powder of monodistribution system is preferred. Therefore, it is preferable to use a powder in which x, y and z components are treated for uniforming respective particle sizes by sieving operation. The average particle size is defined as a 50 % diameter of cumulative particle distribution measured by using an apparatus such as a laser scattering particle size distribution measuring apparatus and the like.

Regarding the compounding ratio of the spherical powders x, y and z, ratios by volume of the x, y and z components based on the calculated total volume of the x, y and z components may be advantageously from 10 to 24% by volume, from 0.1 to 66% by volume and from 24 to 76% by volume respectively, and more advantageously from 10 to 24% by volume, from 0.1 to 36% by volume and from 57 to 76% by volume respectively, and more preferably from 10 to 20% by volume, from 4 to 30% by volume and from 60 to 76% by volume respectively. When the ratios are out of these ranges, flowing property of the resin composition lowers.

The aforesaid descriptions of % by weight in the present invention are obtained by calculation using values obtained by dividing respective weights of the w, y and z components by respective true specific gravity, as volumes of respective components. In general, the apparent volume of a particle having particle size distribution changes depending on manner for filling into a measuring vessel, and when aggregates of heterogeneous particles are mixed, the apparent volumes before and after the mixing are different. Therefore, in the above-described description, apparent volume is not used in calculation of % by volume of each component of the particle aggregate.

The crushed powder (m component) used in the present invention has an average particle size of 1 to 70 mu m, preferably 1 to 30 mu m. Regarding the compounding ratio of the crushed powder (m component), the ratio by weight of them component based on the total weight of the spherical powder component and the crushed powder m component is preferably from 1 to 30% by weight. When the compounding ratio is lower than this range, effect for decreasing fin or flash (a resin thin film due to flowing out of a resin component) generated depending on kind of the resin, and forms of an encapsulating apparatus and mold is poor, and when over this range, flowing property of the resin composition decreases.

The epoxy resin composition according to the invention contains a pyrogenically produced silica, which has been surface modified with Hexamethyldisilazane (HMDS) and structurally modified by a ball mill.

This pyrogenically produced silica is known from the US 5,959,005.

In a preferred subject of the invention the pyrogenically produced, hydrophobized and structurally modified silica can be the AEROSIL R8200, which has the following physical-chemical datas:

| **Properties** | **Unit** | **Typical Value** |
|---|---|---|
| Specific surface area (BET) | m²/g | 160 ± 25 |
| Carbon content | wt. % | 2.0 - 4.0 |
| Tapped density* (approx. value) acc. to DIN EN ISO 787/11, Aug. 1983 | g/l | approx. 140 |
| Moisture* 2 hours at 105 °C | wt. % | ≤ 0.5 |
| pH-value in 4 % dispersion | | ≥ 5.0 |
| SiO₂-content based on ignited material | wt. % | ≥ 99.8 |

| | | |
|---|---|---|
| * ex plant The data represents typical values and not production parameters | | |

| **Registration** | |
|---|---|
| CAS-No. | 68909-20-6 |
| EINECS | 272-697-1 |
| TSCA (USA), | |
| AICS (Australia), | Registered |
| CEPA (Canada), | |
| PICCS (Philippines) | |
| MITI (Japan) | 1-548/7-476 |
| ECL (Korea) | KE-34696 |
| NEPA (China) | List III |

It is preferable that the fillers used in the present invention is previously mixed sufficiently. Specifically, the mixing can be conducted by using an apparatus such as a mixer, cokneader and the like utilizing a rotating blade or air, an apparatus which vibrates, shakes or rotates a vessel, and the like. For judging whether the fillers are fully kneaded or not, it may be advantageous that particle size distributions of samples in different places are measured, and whether they are substantially the same or not is checked. Further, optionally, the filler may be previously treated with a coupling agent or a resin, for use. As the treatment method, there are a method in which mixing is conducted using a solvent, then the solvent is distilled off, and a method in which the coupling agent or the resin is directly mixed with the filler, and the mixture is treated using a mixed.

In the epoxy resin composition of the present invention, in addition, a mold-releasing agent such as natural wax, synthetic wax, higher fatty acid and metal salt thereof, or paraffin and the like, or a coloring agent such as carbon black, and further, a surface treating agent such as a silane coupling agent and the like, may be optionally added. Further, a flame retardant such as antimony trioxide, phosphorus compound, brominated epoxy resin and the like may be added. For exhibiting flame retardant effect, a brominated epoxy resin is particularly preferable.

Further, for lowering stress, various elastomers may be added or previously reacted for use. Examples thereof include addition type or reaction type elastomers and the like such as polybutadiene, butadiene-acrylonitrile copolymer, silicone rubber, silicone oil and the like.

For encapsulating electronic parts such as a semiconductor and the like and producing a resin encapsulated semiconductor device using the epoxy resin composition of the present invention, curing-molding may advantageously be effected by a conventionally known molding method such as transfer mold, compression mold, injection mold and the like.

The epoxy resin according to our invention shows the following advantages:
Low moisture absorption in comparison to hydrophilic fillers
High possible loading levels
Improved storage stability
Improved application properties

## Claims

1. An epoxy resin composition comprising:
(A) an epoxy compound represented by the general formula (1): 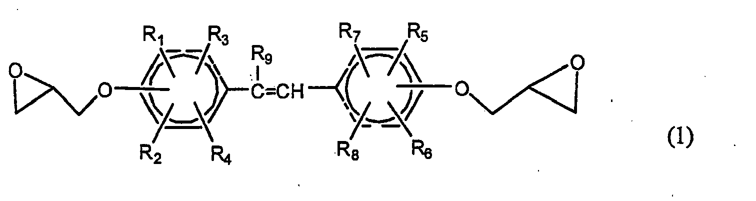 wherein, R1 to R9 represent each independently a hydrogen atom, an acyclic or cyclic alkyl group having 1 to 6 carbon atoms, a substituted or unsubstituted phenyl group or a halogen atom,
(B) a polyfunctional epoxy compound having a functional group number of two or more, and
(C) an epoxy curing agent containing a phenolic hydroxyl group,
wherein the proportion of the epoxy compound (A) is from 0.1 to 99% by weight based on the total weight of the epoxy compounds (A) and (B), whereas the epoxy resin composition contains a pyrogenically produced silica, which has been surface modified with Hexamethyldisilazane (HMDS) and structurally modified by a ball mill.

2. The epoxy resin composition according to claim 1, wherein the proportion of the epoxy compound (A) is from 20 to 99% by weight based on the total weight of the epoxy compounds (A) and (B).

3. The epoxy resin composition according to claim 1, which further comprises an inorganic filler (D) in an amount of from 25 to 95% by weight based on the weight of the whole resin composition.

4. The epoxy resin composition according to claim 3, wherein the inorganic filler (D) is in an amount of from 50 to 95% by weight based on the weight of the whole resin composition.

5. The epoxy resin composition according to claim 1 or 2, wherein the polyfunctional epoxy compound (B) is a glycidyl ether compound of phenol novolaks or a glycidyl ether compound of trisphenolmethane novolaks.

6. A resin-encapsulated semiconductor device obtained by encapsulating a semiconductor element using the epoxy resin composition of claim 1 or 3.

## Patentansprüche

1. Epoxidharzzusammensetzung, umfassend:
(A) eine Epoxidverbindung der allgemeinen Formel (1) : 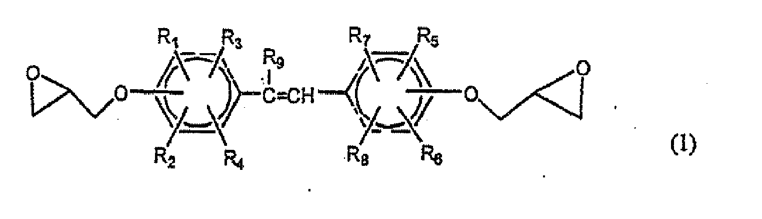 worin R1 bis R9 unabhängig voneinander für ein Wasserstoffatom, eine acyclische oder cyclische Alkylgruppe mit 1 bis 6 Kohlenstoffatomen, eine substituierte oder unsubstituierte Phenylgruppe oder ein Halogenatom stehen,
(B) eine polyfunktionelle Epoxidverbindung mit zwei oder mehr funktionellen Gruppen und
(C) ein Epoxid-Härtungsmittel mit einer phenolischen Hydroxylgruppe,
wobei der Anteil der Epoxidverbindung (A) 0,1 bis 99 Gew.-%, bezogen auf das Gesamtgewicht der Epoxidverbindungen (A) und (B), beträgt, während die Epoxidharzzusammensetzung eine pyrogen hergestellte Kieselsäure, die mit Hexamethyldisilazan (HMDS) oberflächenmodifiziert und mit Hilfe einer Kugelmühle strukturmodifiziert worden ist, enthält.

2. Epoxidharzzusammensetzung nach Anspruch 1, wobei der Anteil der Epoxidverbindung (A) 20 bis 99 Gew.-%, bezogen auf das Gesamtgewicht der Epoxidverbindungen (A) und (B), beträgt.

3. Epoxidharzzusammensetzung nach Anspruch 1, die ferner einen anorganischen Füllstoff (D) in einer Menge von 25 bis 95 Gew.-%, bezogen auf das Gewicht der gesamten Harzzusammensetzung, umfaßt.

4. Epoxidharzzusammensetzung nach Anspruch 3, wobei der anorganische Füllstoff (D) in einer Menge von 50 bis 95 Gew.-%, bezogen auf das Gewicht der gesamten Harzzusammensetzung, vorliegt.

5. Epoxidharzzusammensetzung nach Anspruch 1 oder 2, wobei es sich bei der polyfunktionellen Epoxidverbindung (B) um eine Glycidyletherverbindung von Phenol-Novolaken oder eine Glycidyletherverbindung von Trisphenolmethan-Novolaken handelt.

6. Harzverkapselte Halbleitervorrichtung, erhalten durch Verkapseln eines Halbleiterelements mit der Epoxidharzzusammensetzung nach Anspruch 1 oder 3.

## Revendications

1. Composition de résine époxy comprenant :
(A) un composé époxy représenté par la formule générale (1) : 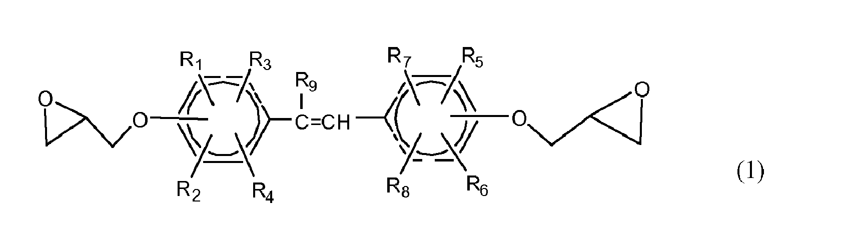 dans laquelle R₁ à R₉ représentent chacun indépendamment un atome d'hydrogène, un groupe alkyle acyclique ou cyclique ayant 1 à 6 atomes de carbone, un groupe phényle substitué ou non substitué ou un atome d'halogène,
(B) un composé époxy polyfonctionnel ayant un nombre de groupes fonctionnels supérieur ou égal à deux et
(C) un agent durcisseur époxy contenant un groupe hydroxyle phénolique,
dans laquelle la proportion du composé époxy (A) est de 0,1 à 99 % en poids sur la base du poids total des composés époxy (A) et (B), tandis que la composition de résine époxy contient une silice produite par pyrogénation, qui a été modifiée en surface avec de l'hexaméthyldisilazane (HMDS) et modifiée du point de vue de la structure par un broyeur à boulets.

2. Composition de résine époxy selon la revendication 1, dans laquelle la proportion du composé époxy (A) est de 20 à 99 % en poids sur la base du poids total des composés époxy (A) et (B).

3. Composition de résine époxy selon la revendication 1, qui comprend en outre une charge inorganique (D) en une quantité de 25 à 95 % en poids sur la base du poids de la composition de résine totale.

4. Composition de résine époxy selon la revendication 3, dans laquelle la charge inorganique (D) est présente en une quantité de 50 à 95 % en poids sur la base du poids de la composition de résine totale.

5. Composition de résine époxy selon la revendication 1 ou 2, dans laquelle le composé époxy polyfonctionnel (B) est un composé éther de glycidyle de novolaques de phénol ou un composé éther de glycidyle de novolaques de trisphénolméthane.

6. Dispositif à semi-conducteur encapsulé de résine obtenu par encapsulation d'un élément semi-conducteur à l'aide de la composition de résine époxy selon la revendication 1 ou 3.
